# EUROPEAN PATENT APPLICATION

(11) **EP 3 527 321 A1**
(43) Date of publication of application: **21.08.2019**
(21) Application number: 18020235.0
(22) Date of filing: 28.05.2018
(51) Int. Cl.: B23K 35/38, B23K 26/14, B23K 26/38, B23K 35/22

(54) **METHOD OF CUTTING A WORKPIECE AND ASSIST GAS COMPOSITION**

(30) Priority: 20.02.2018 GB 201802682
(71) Applicant: Linde Aktiengesellschaft, 80331 München (DE)
(72) Inventor: Fieret, Jim, Orpington, BR6 8DT (GB)

(57) **Abstract**

The invention relates to a method for gas assisted laser cutting of a metal or metal alloy workpiece (20) utilizing an assist gas composition (50) comprising oxygen (51), wherein a laser beam (18) is directed to a cutting area (21) at the workpiece (20) and the assist gas composition (50) is supplied to the cutting area (21), wherein the assist gas composition (50) further comprises ozone (52), and to an assist gas composition (50) for gas assisted laser cutting.

## Description

### Technical Field

The invention relates to a method for gas assisted laser cutting of metal or metal alloy workpieces as well as an assist gas composition useful therein.

### Prior Art

Laser cutting uses a laser beam to heat up and melt material, and a jet (typically of high pressure) of assist gas (or assist gas composition) is used to remove the molten, oxidised or vaporised material from the cut. The molten or oxidised material removal by the jet relies on the melt-shear removal of the rapidly moving assist gas.

The laser beam can have a continuous mode of operation or can be pulsed with a pulse duration in the millisecond range and an on-off cycles of typically 50%. This process is used extensively in the metal fabrication industry with laser power ranging from 100 W to more than 10 kW. The assist gas can be an inert gas or mixture of inert gases, such as nitrogen or argon, or a reactive gas, such as oxygen, or a mixture of inert and reactive gases.

Melt-shear removal laser cutting of metals, such as mild steel, stainless and aluminium with an assist gas comprising inert gas or a mixture of inert gases typically produces a clean, un-oxidised cutting edge which, especially when stainless steel is being cut, can be highly desirable. Laser cutting with an assist gas comprising inert gases typically requires assist gas pressures up to 30 bar.

Some metals, in particular mild steel, can be cut faster if an assist gas comprising a reactive gas is used where the reactive gas is a gas such as oxygen. Also, a mixture of reactive and inert gases can be used, such as air.

When mild steel is being cut with an assist gas comprising oxygen, the oxygen combusts the iron, resulting in the production of additional heat which typically makes the cutting process faster, and in addition the combustion product iron oxide is a liquid. So it is very efficiently removed from the cut by kinetic energy imparting from the assist gas jet.

When increasing the oxygen concentration in the assist gas, the heat contributed to the cutting process becomes large. Also, the material thickness is important for the process: for thin mild steel sheets (e.g. less than 4 mm), most of the cutting process is performed by the heat energy from the laser beam, whereas for very thick steel (e.g. more than 10mm) almost all the heat used for the cutting process comes from the combustion process and the laser beam is merely used to preheat the steel to its combustion temperature of approximately 900° C.

For thick steel plates, industrial oxygen is routinely and widely used in the metal fabrication industry. Industrial oxygen is supplied at a purity of typically 99.5%, whereby the remaining impurity consists mostly of the inert gases argon and nitrogen. The reason for using this purity of oxygen, rather than lower purity grades, or air, is that it allows faster cutting.

For oxygen with a purity of 99.5% the cutting speed in thick steel plates is determined by the inert impurity in the assist gas. The combustion reaction speed between the steel and the oxygen is determined by the oxygen concentration in the assist gas. The oxygen concentration is the highest in the top section of the cut, but lower in the bottom section because the oxygen combusts to form liquid iron oxide, whereas the inert impurity remains in the jet. Therefore, the impurity concentration is higher towards the bottom of the cut, and the oxygen concentration is lower. Thus, the combustion process is slower in the bottom section of the cut, and this determines the cutting speed of the entire process. Therefore, the impurity concentration in the oxygen determines the maximum cutting speed.

The present invention aims to further improve cutting speed when cutting a workpiece utilising an assist gas composition comprising oxygen.

### Disclosure of the Invention

This object is achieved by providing a method and an assist gas composition according to the independent claims.

The invention is based on a method for gas assisted laser cutting of a metal or metal alloy workpiece utilizing an assist gas composition comprising oxygen, wherein a laser beam is directed to a cutting area at the workpiece and the assist gas composition is supplied to the cutting area. Typically, the workpiece cut includes mild steel. Further, the workpiece used can have a thickness of at least 3 mm, preferably of at least 7 mm, particularly preferably of at least 10 mm.

As the impurities in industrial oxygen are inert, they cannot be removed by any chemical means. It is possible to purify the oxygen by other means, such as pressure-swing absorption or membrane technology, but these processes require very large and expensive equipment and are in practice not feasible, and typically not used. Thus, improving the purity of oxygen to more than 99.5% or even more than 99.95% is no practicable way to improve cutting speed.

The reaction speed of the combustion process is, apart from the concentration, also determined by the chemical reactivity of the reactive component present in the assist gas that is used. For example, the gases fluorine (F₂) and chlorine (Cl₂) are much more reactive than oxygen (O₂) but clearly of such hazardous nature that in practice they could not be used.

By using ozone as a further component of the assist gas composition (i.e. the gas composition comprises bi-atomic and tri-atomic oxygen) cutting speed can be further improved without improving purity of oxygen and removing the harmful inert contaminants (such as argon and nitrogen) since ozone is more reactive than oxygen. The reaction speed of the ozone with, for example, steel is much faster than the reaction speed of oxygen with steel. Therefore, the cutting process with ozone enriched oxygen is faster than with oxygen alone.

It is to be noted that ozone (O₃) is what is also known as tri-atomic oxygen in contrast to bi-atomic oxygen (O₂) which is also known as just oxygen. In the context of the present invention the term oxygen is used in the sense of bi-atomic oxygen whereas tri-atomic oxygen is called ozone.

Preferably, the assist gas composition is enriched with the ozone before being supplied to the cutting area. In particular, the ozone can be generated by means of an ozone generator supplied with feedgas comprising oxygen and/or the ozone enriched assist gas is generated from the feedgas by means of the ozone generator. Ozone generators of a variety of different types are commercially available and can take either air or industrial oxygen, i.e. oxygen with a concentration of at least 90%, preferably of at least 99%, particularly preferably of at least 99.5%, as feedgas. Thus, the assist gas composition containing a percentage of ozone can be generated locally at, for example, a working place at which cutting is performed.

The process of ozone generation is most efficient if industrial oxygen is used, resulting in approximately 5% to 30%, in particular 5% to 15%, ozone concentration (by weight). The ozone (O₃) is unstable and its half-life time to convert back to oxygen (O₂) can vary from 30 minutes to several hours, depending on pressure, temperature, humidity and particle content. For this reason, ozone is typically not stored in cylinders, but manufactured in an ozone generator at the point of use. The feedgas, however, can be stored in cylinders, cylinder banks, cryogenic storage tanks or the like and can be supplied to the ozone generator.

Preferably, the assist gas composition is supplied with a pressure of approximately or exactly 1 bar and/or with a flow rate of approximately or exactly 1 m³ per hour. These are values to allow fast cutting. Further, this pressure is low enough for the ozone to remain stable and not spontaneously dissociate into oxygen. The typical flow rate for oxygen cutting of, for example, mild steel is 1 m³ per hour. So at an ozone concentration of, for example, 10% by weight, an ozone generator with a capacity of approximately 100 g per hour is required. Such ozone generators are readily available commercially from a variety of suppliers.

The laser cutting process with ozone does not create any significant hazards so long as the laser cutting device has an efficient extractor with catalytic ozone eliminator. Such equipment is readily commercially available.

A further object of the invention is to provide an assist gas composition for gas assisted laser cutting of a metal or metal alloy workpiece, which comprises oxygen and ozone. Preferably, the concentration of ozone in the assist gas composition is between 5% and 30%, preferably between 5% and 15% (by weight).

In respect of further embodiments and advantages of the assist gas it is referred to the statements above in order to avoid repetition.

The invention will now be further described with reference to the accompanying drawings, which show a preferred embodiment.

### Brief description of the drawings

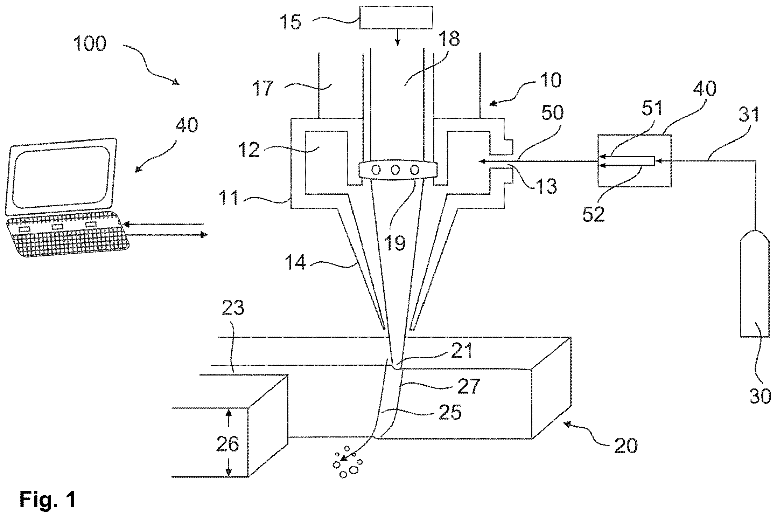

- Fig. 1: schematically shows a device, with which the method of the present invention can advantageously be implemented.

### Detailed description of the drawings

In Fig. 1, a laser cutting device for cutting a metal workpiece 20, for example a mild steel workpiece, of thickness 26 is schematically shown and generally designated 100. The cutting of workpiece 20 is achieved by means of a cutting head 10. Cutting head 10 is provided with a suitable cutting laser 15, which emits a laser beam 18. Cutting head 10 comprises a housing 11 with a housing cavity 12. Via a gas inlet 13, an assist gas composition 50 can be brought into cavity 12.

Assist gas composition 50 is provided by supplying feedgas 31 from, for example, a cylinder 30 to an ozone generator 40. Feedgas 31 can comprise oxygen with a purity of 99.5%, i.e. feedgas 31 is industrial oxygen. In ozone generator 40, ozone 52 is generated from feedgas 31. Since not all of the oxygen present in feedgas 31 is transformed into ozone 52, still oxygen 51 is present. Ozone 52 and oxygen 51 are then components of assist gas composition 50. Typically, the concentration of ozone 52 in assist gas 50 is 5% to 15 %, preferably 10% (by weight).

It is to be noted that feedgas 31 typically comprises impurities as mentioned above. These impurities are still present in assist gas composition 50.

A control computer 40 can be used to control cutting head 10, for example, a user can enter desired parameters, for example, a speed for relative displacement between cutting head 10 and workpiece 20.

The lower part of housing 11 is provided as a compound nozzle comprising a duct 14. Duct 14 is connected to cavity 12 and inlet 13, and serves to bring assist gas 50 onto the surface of workpiece 20 in the vicinity of cutting area 21, as will be described below.

A typical reaction between assist gas 50 and laser beam 18, which is focused onto cutting area 21 of workpiece 20 by means of a lens, will now be described. By means of laser beam 18, cutting area 21 of workpiece 20 is heated, which leads to a melting of the workpiece material at cutting area 21.

Furthermore, due to the heat generated by laser beam 18, oxygen and ozone in the assist gas composition 50 begin to combust the material leading to an additional heat generation in cutting area 21. At the same time, the assist gas composition 50 leads to a removal of the molten material from cutting area 21 of workpiece 20, which is symbolized by arrow 25.

The process of cutting workpiece 20 along a cutting edge 22 is shown purely schematically. A kerf caused by laser beam 18 and the reactions of assist gas 50 due to the heat generated by the laser beam is designated 23. Front 27 of kerf 23 will typically be somewhat slanted under the influence of laser beam 18 and assist gas 50.

## Claims

1. Method for gas assisted laser cutting of a metal or metal alloy workpiece (20) utilizing an assist gas composition (50) comprising oxygen (51), wherein a laser beam (18) is directed to a cutting area (21) at the workpiece (20) and the assist gas composition (50) is supplied to the cutting area (21),
**characterized in that** the assist gas composition (50) further comprises ozone (52).

2. Method according to claim 1, wherein the assist gas composition (50) is enriched with the ozone (52) before being supplied to the cutting area (21).

3. Method according to claim 2, wherein the ozone (52) is generated by means of an ozone generator (40) supplied with feedgas (31) comprising oxygen.

4. Method according to claim 3, wherein the ozone enriched assist gas composition (50) is generated from the feedgas (31) by means of the ozone generator (40).

5. Method according to claim 3 or 4, wherein the feedgas is air or wherein the feedgas (31) comprises oxygen with a concentration of at least 90%, preferably of at least 99%, particularly preferably of at least 99.5%.

6. Method according to anyone of the preceding claims, wherein the concentration of ozone (52) in the assist gas composition (50) is between 5% and 30%, preferably between 5% and 15%.

7. Method according to anyone of the preceding claims, wherein the assist gas composition (50) is supplied with a pressure of approximately 1 bar and/or with a flow rate of approximately 1 m³ per hour.

8. Method according to anyone of the preceding claims, wherein the workpiece (20) being cut includes mild steel and/or wherein the workpiece (20) being cut has a thickness (26) of at least 3 mm, preferably of at least 7 mm, particularly preferably of at least 10 mm.

9. Assist gas composition (50) for gas assisted laser cutting of a metal or metal alloy workpiece (20), the assist gas composition (50) comprising oxygen (51),
**characterized in that** the assist gas composition (50) further comprises ozone (52).

10. Assist gas composition (50) according to claim 9, wherein the concentration of ozone (52) in the assist gas composition (50) is between 5% and 30%, preferably between 5% and 15%.
